(19) Europäisches Patentamt / European Patent Office / Office européen des brevets

(11) **EP 4 624 602 A1**

(12) **EUROPEAN PATENT APPLICATION**

(43) Date of publication:
**01.10.2025 Bulletin 2025/40**

(21) Application number: **24167018.1**

(22) Date of filing: **27.03.2024**

(51) International Patent Classification (IPC):
**C22B 3/00** $^{(2006.01)}$     **C22B 60/02** $^{(2006.01)}$

(52) Cooperative Patent Classification (CPC):
**C22B 23/0461; C22B 60/0217**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Umicore**
**1000 Brussels (BE)**

(72) Inventors:
• **VERDICKT, Werner**
  **Olen (BE)**
• **VEREYCKEN, Willem**
  **Olen (BE)**
• **ROOSEN, Joris**
  **Olen (BE)**

(54) **ENVIRONMENTALLY BENIGN METHOD FOR REMOVING URANIUM FROM NICKEL- AND/OR COBALT-CONTAINING RESOURCES**

(57) The present invention concerns an environmentally benign method for removal of uranium from nickel- and/or cobalt-containing resources. It provides a process for preparing nickel and/or cobalt salt solutions, said process comprising the steps of:

i. leaching a solid material feed comprising uranium, at least one of nickel and cobalt, and at least one of iron and aluminium, with a mineral acid in an aqueous medium, thereby obtaining a leachate solution comprising uranium ions and at least one of nickel ions and cobalt ions;

ii. increasing the pH of said leachate solution, thereby precipitating iron and/or aluminium compounds;

iii. simultaneous or subsequent to step ii., adding a phosphate compound to the basified leachate solution obtained in step ii. to form a uranium precipitate;

iv. separating the precipitate formed in step iii. from the leachate solution, thereby obtaining an aqueous solution comprising uranium, and at least one of nickel ions and cobalt ions; and

v. extracting uranium from said aqueous solution obtained in step iv. into an organic phase comprising an extractant and a diluent, thereby obtaining an aqueous raffinate comprising at least one of nickel ions and cobalt ions.

The inventive process allows for efficient removal of uranium from nickel- and/or cobalt-based solid materials.

EP 4 624 602 A1

# EP 4 624 602 A1

**Description**

## TECHNICAL FIELD

The present invention relates to the processing of a nickel- and/or cobalt-containing resources to obtain aqueous salt solutions comprising nickel and/or cobalt with reduced uranium content, which can be used in various industries such as stainless steel production, electroplating, and batteries.

## INTRODUCTION

Uranium is a naturally occurring element that is often found in small concentrations in many types of rocks and that is commonly present in the feedstock used in the production of various metals. For instance, nickel and cobalt are often extracted from ores that also contain uranium. However, as uranium is a radioactive element, it is crucial to sequester it during the processing of nickel-containing raw materials to prevent potential harm to human health and the environment. Therefore, developing efficient methods to remove or reduce the amount of uranium in nickel-containing feedstocks is a critical area of research and development.

Currently, several methods are available for removing uranium from feedstocks, including uranium precipitation, solvent extraction, ion exchange, and microbial processes. These methods can be effective but can also be expensive and complex, particularly in the case of solvent extraction and ion exchange, which require specialized equipment and reagents. Furthermore, the disposal of the resulting waste streams from these processes can also pose environmental challenges.

A method for removing uranium from nickel-containing feedstocks using ion exchange resins has been proposed by Kiegiel, K. et al. Kiegiel, K., Abramowska, A., Bie┼ uszka, P., Zakrzewska-Koltuniewicz, G., & Wolkowicz, S. "Solvent extraction of uranium from leach solutions obtained in processing of Polish low-grade ores." Journal of Radioanalytical and Nuclear Chemistry, 311, 589-598, 2017, https://doi.org/ 10.1007/s10967-016-5029-5. The method provides a simple alternative to methods such as solvent extraction, ion exchange, and microbial processes. Yet, the effectiveness of the proposed method may depend on the specific properties of the feedstocks and the ion exchange resins used, and the scalability of the method for industrial applications may require further research and development.

GB759900A describes the selective precipitation of uranium from solutions thereof containing other metals by adjustment of the pH in the presence of a soluble phosphate or arsenate. According to one example, a solution containing U, Fe, Al, Zn and Co sulphates and having an Al/U ratio of 1:1 was treated with calcium hydroxide to a pH of 3.1 whereby basic ferric sulphate precipitated, the pH falling to 2.8. Phosphoric acid was added and the pH adjusted to 2.5 with calcium hydroxide, thereby precipitating the uranium.

WO2022090628A1 discloses a system for removing uranium from a cobalt-rich raffinate. The system comprises: a copper precipitation circuit for processing the cobalt-rich raffinate into a copper precipitate, arranged to receive phosphoric acid from a phosphoric acid storage to precipitate uranium included in the cobalt-rich raffinate; a copper thickener circuit for processing the copper precipitate into a first flow that comprises copper hydroxide and precipitated uranium and a second flow that comprises a cobalt sulphate solution and residual phosphoric acid; a measurement device for measuring a quantity that is representative of an amount of residual phosphoric acid in the second flow; and a control system for regulating a dosage of phosphoric acid introduced to the copper precipitation circuit in dependence of said measured quantity in view of a target amount of residual phosphoric acid.

Such methods relying on precipitation of uranium with phosphoric acid require high excess usage of the phosphate compound to remove uranium from the solutions to a low ppm level, and therefore suffer from a loss of valuable nickel and/or cobalt atoms via the uranium precipitate. Further, such methods strongly rely on monitoring and control systems to ensure the correct dosage of phosphoric acid. Therefore, there is a need for more effective, efficient, and sustainable methods for removing uranium from feedstocks. Such methods should be cost-effective, environmentally friendly, and produce minimal waste streams. In addition, the methods should be applicable to a wide range of feedstocks and applicable to different industries.

## SUMMARY

The current invention provides in a solution for at least one of the above mentioned problems by providing a method for efficient removal of uranium from nickel- and/or cobalt-containing resources to produce nickel and/or cobalt salt solutions, as described in claim 1.

Many sourced solid material feeds comprising nickel and/or cobalt comprise minor amounts of uranium. The present invention is advantageous because it provides a simple and efficient method for preparing an aqueous solution comprising nickel and/or cobalt that has a significantly reduced uranium content. The method involves a series of steps including leaching a solid material feed comprising nickel and/or cobalt and uranium with a mineral acid in an aqueous medium, increasing the pH of the leachate solution to precipitate iron and aluminium, if present, and adding a phosphate compound to form a uranium precipitate. Finally, the method includes a solvent-extraction step to remove remaining traces of uranium.

The method is applicable to various solid material feeds, including MHP and CHIP. Moreover, the current invention for removing uranium from a nickel- and/or cobalt-based feedstock including two steps of uranium removal offers advantages over alternative methods only making use of solvent extraction, ion exchange, or precipitation with a phosphate compound in several ways. Firstly, the proposed method is relatively simple and straightforward, involving only a few steps to remove most of the uranium, namely leaching with a mineral acid, increasing pH, and adding a stoichiometric excess of a phosphate compound to precipitate uranium. This simplicity reduces the complexity and cost associated with alternative methods such as solvent extraction and ion exchange, which require specialized equipment and more complex chemical processes. Secondly, the proposed method is based on readily available materials such as mineral acids and phosphate compounds, making it a cost-effective solution.

In contrast, current methods relying only on solvent extraction or ion exchange for uranium removal not only typically require the use of expensive organic solvents and resins, which contribute to the higher cost of these methods, but moreover, they produce complex organic solutions or resins that require further processing to recover the valuable metals and uranium for disposal, adding to the complexity and cost of these methods. The method according to the current invention has the advantage that uranium only exits the process via the uranium precipitate that can be easily filtered and separated from the leachate, allowing for efficient recovery and further processing of uranium. On the other hand, trace amounts of uranium are further purified from the solution via solvent extraction, in a way that the extraction capacity of the solvent to remove also other impurities is preserved. Overall, the reagent cost decreases and recovery of nickel and/or cobalt increases by the current invention.

## DESCRIPTION OF THE FIGURES

By means of further guidance, figures are included to better appreciate the teaching of the present invention. Said figures are intended to assist the description of the invention and are nowhere intended as a limitation of the presently disclosed invention.

The figures and symbols contained therein have the meaning as commonly understood by one of ordinary skill in the art to which this invention belongs.

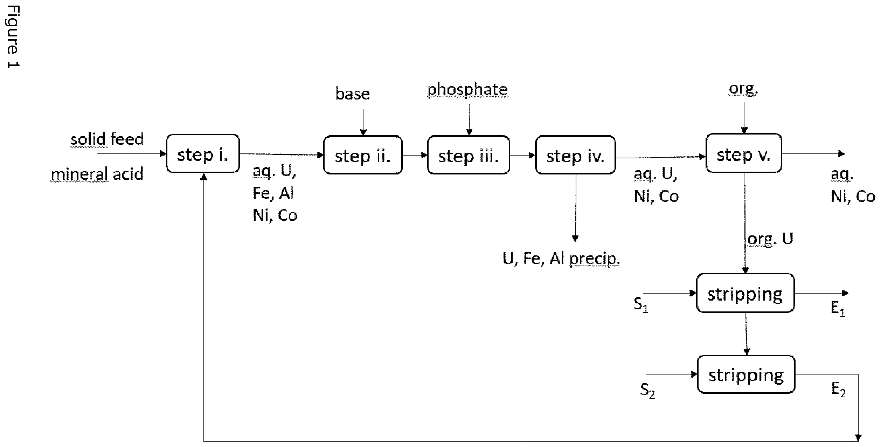

Figure 1 shows a preferred arrangement of process steps according to the current invention.

## DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints. All percentages are to be understood as percentage by weight, abbreviated as "wt.%" or as volume per cent, abbreviated as "vol.%", unless otherwise defined or unless a different meaning is obvious to the person skilled in the art from its use and in the context wherein it is used.

In the context of the present invention, the term "raw material feed" is to be considered synonymous to the term "solid material feed," or "solid material feedstock" or "feedstock" and refers to one or more feedstocks that comprise at least uranium and one of nickel and cobalt, and optionally manganese and/or lithium. Said metals may be included as such or may be included as a compound of the aforementioned metals, or as a mixture of compounds. In some embodiments, said raw material feed may comprise any one or combination of raw materials and recycled materials. Examples of raw materials include, but are not limited to, mixed hydroxide precipitates (MHP), nickel sulphide concentrate, cobalt sulphide concentrate, nickel laterite, nickel matte, or ferronickel. Examples of recycled materials include, but are not limited to, spent cathode material, and material derived from recycled lithium-ion batteries or lithium-ion battery manufacturing scrap, collectively, referred to herein as 'black mass'.

In the context of the present invention, the term "MHP" is to be considered as an abbreviation of the term "mixed hydroxide precipitate." Mixed hydroxide precipitate (MHP) is an intermediate product of nickel metallurgy that is often derived from processing laterite ores which contains primarily nickel and a minor amount of cobalt. It can also be produced from other sources, for example as a by-product from Ni recovery out of side streams from various metallurgical or mining operations. Alternatively or additionally, MHP may be obtained from nickel and/or cobalt containing hydroxide materials produced as production waste during preparation of cathode materials or obtained from battery recycling processes.

In the context of the present invention, the term "CHIP" is to be considered as an abbreviation of the term "cobalt hydroxide intermediate precipitate." Cobalt hydroxide intermediate is comprised primarily of cobalt, and typically has a cobalt content of 25 wt.% to 40 wt.%, relative to the total dry weight of said intermediate product. Typically, said CHIP comprises a significant amount of nickel. CHIP's are known to have a very low amount of impurities, which render them attractive for processes according to the present invention.

Said "solid material feed" may refer to a solid feed comprising an MHP product, a CHIP product, or a mixture of two or more MHP products, two or more CHIP products, or a mixture of one or more MHP products and one or more CHIP products. Preferably, said raw material feed comprises at least one nickel compound and at least one cobalt compound. Preferably, said nickel compound and said cobalt compound are comprised as a nickel(II) compound and as a cobalt(II) compound, respectively. Yet, said nickel compound and said cobalt compound may also be comprised in higher oxidation states such as 3+ or 4+, or said metal-containing feed may comprise a mixture of nickel and/or cobalt compounds in oxidation state 2+ and in oxidation state 3+ and/or 4+. In addition, said raw material feed may comprise alloys of nickel (0) and cobalt (0), and/or said raw material feed may comprise one or more ores comprising nickel and cobalt.

Also, said solid material feed comprises uranium and may comprise iron and/or aluminium and one or more impurities whereby said impurities comprise one or more selected from the list comprising Cu, Zn, Mn, Li, F, C, Ca, Si, P, As, Cd, Sb and Mg.

In the context of the present invention, the term "phosphate compound" refers to a chemical compound that contains a phosphate ion ($PO_4^{3-}$), or a derivative thereof. Phosphate ions are anions with a central phosphorus atom that is bonded to four oxygen atoms. The group of phosphate compounds comprises phosphoric acid ($H_3PO_4$) and inorganic salts comprising $H_2PO_4^-$, $HPO_4^{2-}$ and/or $PO_4^{3-}$. Examples of phosphate compounds are, but not limited to, phosphoric acid ($H_3PO_4$), sodium phosphate ($Na_3PO_4$), calcium phosphate ($Ca_3(PO_4)_2$) and superphosphate ($Ca(H_2PO_4)_2 \cdot H_2O$).

In the context of the present invention, the term "continuous process" is to be considered as a process in which the produced solution has a substantially constant outflow and composition. Specifically, a continuous process is a process in which the produced solution has a constant composition within the range of what are considered normal process variations. More specifically, the produced solution has a composition wherein the concentration of each ingredient is within the range of +/-20% or less, preferably +/-10% or less, more preferably +/-5% or less, even more preferably +/-3% or less of its average concentration. In a preferred embodiment, the present invention provides a continuous process which operates under steady-state conditions.

In the context of the present invention, the term "aqueous medium" is used for a water-based solution. The aqueous medium facilitates the handling of the contents of the reactor, such as mixing or pumping. The aqueous medium may already contain some of the other ingredients taking part in the reaction, or those can be added later. Said aqueous medium may in particular contain the mineral acid.

In the context of the present invention, the following terms are used to identify the "organic phase", its components or the whole:

i. In the context of the present invention, the term "organic phase" is to be understood as synonymous for the term "solvent" or "solvent mixture" and designates a liquid composition comprising one or more extractants, diluents, and optionally one or more modifiers.

ii. The "extractant" or extracting agent is the active component in the organic phase that extracts the metal species to the organic phase by chemically binding with it and forming a metal-extractant complex that is better soluble in the organic phase than it is in the aqueous phase.

iii. The "diluent" is an organic molecule or usually a mixture of different organic molecules added to the organic phase to dilute the extractant and allow for dissolution of the metal complexes, improve the physical properties of the organic phase (especially phase-separation phenomena) and decrease its cost, given that diluents are usually cheaper than extractants. Diluents are frequently kerosene fractions and can be aliphatic or aromatic hydrocarbons, naphthenes, etc., or mixtures thereof. The diluent is preferably a kerosene-based petroleum fraction such as Escaid, Elixore, Shellsol, Isopar, etc.

iv. The organic phase may also contain a "modifier". A modifier is sometimes added to improve solubility of metal complexes into the organic phase, to alter the physical properties of the solvent such to avoid crud formations or third-phase formation as these phenomena are unwanted in solvent extraction. A modifier can also be added to prevent chemical degradation of extractant or diluent. However, modifiers may impair the selectivity of the organic phase as these may participate in the complex formation of the metals with the extractant.

The "selectivity" S of an extractant for one metal over another metal can be expressed as the ratio of the distribution coefficients D for both metals:

$$S_{U/Ni} = D_U / D_{Ni}$$

The "distribution coefficient" of a metal is understood to be the ratio of the equilibrium concentrations of this metal in the organic phase and the same metal in the aqueous phase, respectively:

$$D_M = [M]_O / [M]_A$$

wherein M is a metal, such as nickel or uranium, O refers to the organic phase and A refers to the aqueous phase.
The term "O/A ratio", or "O/A", refers to the volume ratio of organic phase (O) to aqueous phase (A) used for solvent extraction or solvent stripping.
The general inventive concept of the present invention consists of a process for preparing nickel and/or cobalt salt solutions, said process comprising the steps of:

i. leaching a solid material feed comprising 1 to 1000 ppm uranium, and at least 20 wt% of at least one of nickel and cobalt relative to the total dry weight of the solid material feed, with a mineral acid in an aqueous medium, thereby obtaining a leachate solution comprising uranium ions and at least one of nickel ions and cobalt ions, respectively;
ii. precipitating at least in part uranium by adding a phosphate compound and bringing the pH of said leachate solution to at least 2.5, and separating the precipitate from the aqueous medium;
iii. extracting the remaining uranium from the aqueous filtrate obtained in step ii. into an organic phase comprising an extractant and a diluent, thereby obtaining an aqueous raffinate comprising at least one of nickel ions and cobalt ions.

The inventive process can be used in various industries such as stainless steel production, electroplating, and batteries. The inventive process including two stages of uranium removal, more specifically including both phosphate precipitation and solvent-extraction, is advantageous over alternative methods only making use of solvent extraction, ion exchange, or precipitation with a phosphate compound or other compounds such as ammonium carbonate or hydroxide. Namely, solvent extraction and ion exchange typically require the use of expensive organic solvents and resins, and they produce complex organic solutions or resins that require further processing to recover the valuable metals and the uranium for disposal, adding to the complexity and cost of these methods. On the other hand, removal of trace amounts of uranium via precipitation with a phosphate compound requires the use of a high excess of the phosphate compound, which eventually leads to precipitation of valuable cobalt and or nickel atoms from the leaching solution. The method according to the current invention has the advantage that uranium only exits the process via the uranium precipitate that can be easily filtered and separated from the leachate, allowing for efficient recovery and further processing of uranium. Moreover, the uranium precipitation can be performed in an efficient way, limiting the required excess of phosphate compounds, because trace amounts of uranium are further purified from the solution via solvent extraction. Preferably, the process according to the invention, is performed in a way that the extraction capacity of the solvent to remove also other impurities is preserved. This is enabled by stripping of uranium from the solvent with highly concentrated acid, whereby the eluate containing uranium can be recycled to the first step of the process. Overall, the present invention provides a unique and effective process that minimizes the use of hazardous chemicals, maximizes the recovery of uranium, nickel and cobalt, and produces a nickel- and/or cobalt-rich solution with low uranium content.
In a first aspect, the present invention provides a process for preparing nickel and/or cobalt salt solutions, said process comprising the steps of:

i. leaching a solid material feed comprising 1 to 1000 ppm uranium, at least 20 wt% of at least one of nickel and cobalt, and at least 0.05 wt% of at least one of iron and aluminium, relative to the total dry weight of the solid material feed, with a mineral acid selected from the group consisting of $H_2SO_4$, HCl and $HNO_3$ in an aqueous medium, thereby obtaining a leachate solution comprising uranium ions and at least one of nickel ions and cobalt ions, respectively;
ii. increasing the pH of said leachate solution to at least 2.5 by adding a base, thereby precipitating iron and/or aluminium compounds and obtaining a basified leachate solution;
iii. simultaneous or subsequent to step ii., adding a phosphate compound to the basified leachate solution in step ii. to form a uranium precipitate;

iv. separating the precipitate formed in step iii. from the leachate solution, thereby obtaining an aqueous solution comprising uranium, and at least one of nickel ions and cobalt ions; and

v. extracting uranium from said aqueous solution obtained in step iv. into an organic phase comprising an extractant, and a diluent, thereby obtaining an uranium-enriched organic phase and aqueous raffinate comprising at least one of nickel ions and cobalt ions.

The process involves leaching a solid material feed comprising uranium, at least one of nickel and cobalt, and at least one of iron and aluminium, with a mineral acid selected from the group consisting of $H_2SO_4$, HCl, and $HNO_3$ in an aqueous medium, thereby obtaining a leachate solution comprising uranium ions and nickel- and/or cobalt-ions, respectively. This leaching step is performed to dissolve the uranium and, if present, nickel, cobalt, iron and aluminium in the solid material feed into the solution. The leachate solution is then subjected to a series of steps to remove, or at least reduce the amount of uranium, present in the leachate solution by forming a uranium precipitate and performing solvent extraction of uranium.

In step i., the solid material feed comprising uranium, at least one of nickel and cobalt, and at least one of iron and aluminium, is leached in a mineral acid selected from $H_2SO_4$, HCl, and $HNO_3$ or mixtures thereof in an aqueous medium. Preferably, said mineral acid is $H_2SO_4$ or HCl, and more preferably, said mineral acid is $H_2SO_4$, because it allows for the straightforward formation of nickel sulphate and cobalt sulphate, respectively, and since sulphuric acid is more easily handled. Optionally, step i. may be performed in the presence of a phosphate compound selected from the group consisting of $H_3PO_4$ and compounds comprising $H_2PO_4^-$, $HPO_4^{2-}$, and $PO_4^{3-}$.

The feedstock used in the process can be any raw material that comprises uranium, at least one of nickel and cobalt, and at least one of iron and aluminium. The solid material feed typically contains 1 to 1000 ppm uranium, relative to the total dry weight of the solid material feed, more preferably 5 to 100 ppm, even more preferably 10 to 70 ppm uranium.

The solid material feed typically contains at least 20 wt% of at least one of nickel or cobalt, relative to the total dry weight of the solid material feed, more preferably at least 25 wt%, even more preferably at least 30 wt%, and less than 60 %, more preferably less than 53 wt%.

The solid material feed typically contains at least 0.05 wt% of at least one of iron or aluminium, relative to the total dry weight of the solid material feed, more specifically at least 0.09 wt%, even more specifically at least 0.2 wt%, and less than 10 wt%. The solid material feed may comprise one or more other impurities whereby said impurities comprise one or more selected from the list comprising Cu, Zn, Mn, Li, F, C, Ca, Si, P, As, Cd, Sb and Mg.

The preferred feedstocks are mixed hydroxide precipitate (MHP) and cobalt hydroxide precipitate (CHIP).

In a preferred embodiment, said mixed hydroxide precipitate (MHP) contains 5 to 100 ppm U, relative to the total dry weight of said mixed hydroxide precipitate. Preferably, said mixed hydroxide precipitate comprises nickel in an amount of 25 to 60 wt.%, relative to the total dry weight of said mixed hydroxide precipitate, preferably in an amount of 33 to 53 wt.%. Preferably, said mixed hydroxide precipitate comprises cobalt in an amount of at least 0.1 wt.%, relative to the total dry weight of said mixed hydroxide precipitate, preferably in an amount of at least 0.2 wt.%, and more preferably in an amount of 0.9 to 6.0 wt.%. Preferably, said mixed hydroxide precipitate comprises manganese in an amount of at least 0.001 wt.%, relative to the total dry weight of said mixed hydroxide precipitate, preferably in an amount of at least 0.01 wt.%, and more preferably in an amount of 0.1 to 7.0 wt.%. Preferably, said mixed hydroxide precipitate comprises carbon in an amount of 0.01 to 5.00 wt.%, relative to the total dry weight of said mixed hydroxide precipitate, more preferably in an amount of 0.01 to 3.00 wt.%, and more preferably in an amount of 0.01 to 1.00 wt.%. Preferably, said mixed hydroxide precipitate comprises zinc in an amount of 0.01 to 0.30 wt.%, relative to the total dry weight of said mixed hydroxide precipitate. Preferably, said mixed hydroxide precipitate comprises iron in an amount of 0.1 to 3.0 wt.%, relative to the total dry weight of said mixed hydroxide precipitate. Preferably, said mixed hydroxide precipitate contains 0.1 to 3.0 % Al, relative to the total dry weight of said mixed hydroxide precipitate. Preferably, said mixed hydroxide precipitate comprises water in an amount of 25 to 60 wt.%, relative to the total wet weight of said mixed hydroxide precipitate, preferably in an amount of 30 to 55 wt.%.

The leaching process can be performed at a temperature ranging from ambient to 100°C, preferably from 70 to 95°C, and at a pressure ranging from atmospheric to 10 bar, preferably from atmospheric to 5 bar. The leaching process can also be performed in the presence of a reducing agent to increase the leaching yield. The reducing agent can be selected from a variety of reducing agents, such as sulphur dioxide, hydrogen peroxide, hydrazine, and hydroxylamine.

In step ii., the pH of the leachate solution obtained from step i. is increased to at least 2.5 by adding a base to the solution, thereby precipitating iron and/or aluminium and more preferably to a pH between 2.5 and 7.0 or between 3.0 and 6.0, and even more preferably between 2.5 and 5.0 or between 3.0 and 5.0, and most preferably at a pH of about 3.0, 3.5, 4.0, 4.5 or 5.0, or any value there in between. The base used can be any suitable inorganic or organic base, preferably an inorganic base selected from the group consisting of potassium hydroxide, potassium carbonate, nickel hydroxide, nickel carbonate, cobalt hydroxide, cobalt carbonate, manganese hydroxide, manganese carbonate, calcium hydroxide, calcium carbonate, sodium hydroxide, sodium carbonate, lithium hydroxide, lithium carbonate, magnesium oxide, magnesium hydroxide, magnesium carbonate, or a combination of two or more of the aforementioned. More preferably, said base is NaOH, KOH, CaOH$_2$, or NiCO$_3$, or a combination thereof. The preferred bases are Ca(OH)$_2$ and NiCO$_3$. The precipitate containing iron and/or aluminium can be optionally filtered off from the leachate solution.

In a preferred embodiment, the leachate solution obtained from step i. is processed in a multi-step sequence, whereby the pH of the leachate solution is first increased in step ii.(a) to a pH between 2.5 and 4.5, preferably to a pH between 3.0 and 4.5, more preferably between 3.5 and 4.5, and most preferably to a pH of about 4. The increase in pH effects the selective precipitation of iron and aluminium compounds while nickel and cobalt ions remain in solution. Subsequently, the pH of the basified leachate solution from step ii.(a) is increased in step ii.(b) to between 4.5 and 7.0, preferably between 4.5 and 6.0, and more preferably to a pH between 4.5 and 5.5 and most preferably to a pH of about 5. Preferably, the precipitate formed in step ii.(a) is filtered off prior to step ii.(b).

The precipitate comprising iron and/or aluminium which is formed in step ii. may be filtered off from the basified leachate solution either in part or entirely prior to adding a phosphate compound in step iii. Removing the precipitate at least in part provides the advantage that the final precipitate which is filtered off in step iv. has a higher content of uranium which improves the efficiency of the subsequent uranium recovery. Yet, in a preferred embodiment, the precipitate comprising iron and/or aluminium which is formed in step ii. is not filtered off from the basified leachate solution prior to adding a phosphate compound in step iii. Preferably, the phosphate compound is added to the leaching solution of step i. and/or to the basified leaching solution of step ii.(a) and/or step ii.(b), said solutions comprising a precipitate of iron and/or aluminium.

In step iii., a phosphate compound is added to the leachate solution obtained in step i. and/or to the basified leachate solution obtained in step ii. to form a uranium precipitate. The phosphate compound used can be selected from the group consisting of H$_3$PO$_4$, H$_2$PO$_4^-$, HPO$_4^{2-}$, and PO$_4^{3-}$. The phosphate compound is added in a stoichiometric excess of 10 to 1000 times, preferably 25 to 500 times the amount of uranium ions in the leachate solution obtained in step i. and/or in the basified leachate solution obtained in step ii., preferably 50 to 300 times the amount of uranium ions, and most preferably about 100, 150 or 200 times the amount of uranium ions.

The uranium precipitate is then filtered off from the leachate solution in step iv. If the precipitate containing iron and/or aluminium was not previously filtered off from the leachate solution prior to step iii., it can be filtered off in step iv. together with the uranium precipitate. The process may be conducted in a single vessel, which simplifies the process and reduces costs. Preferably, the process is a continuous process.

The precipitate containing uranium can then be subjected to a reduction process to recover the uranium. The reduction process can include roasting the precipitate in air, followed by leaching with an acid to recover the uranium.

In a preferred embodiment of the invention, 20 to 95 at.% of the uranium ions present in the basified leachate solution in step ii. are precipitated into the uranium precipitate of step iii., preferably at least 30 at.%, more preferably at least 55 at.%, preferably less than 90 at.%, more preferably less than 85 at.%.

The present invention according to the first aspect, includes in step v. the extraction of uranium from said aqueous solution obtained in step iv. into an organic phase comprising an extractant and a diluent, thereby obtaining an uranium-enriched organic phase and an aqueous raffinate containing at least one of nickel ions and cobalt ions.

Generally, any extractant with high selectivity for uranium over nickel and/or cobalt can be used. For example, alkyl phosphorus-based extractants such as tributyl phosphate or di(2-ethylhexyl) phosphoric acid (D2EHPA), carboxylic acid derivatives such as neodecanoic acid, tertiary amines, or mixtures thereof, can be used.

In a preferred embodiment, together with the uranium, if present, also other impurities such as manganese, calcium, zinc, copper and cadmium are selectively extracted to the organic phase over nickel and cobalt.

In one embodiment, also cobalt is extracted to the organic phase, next to uranium and other impurities, such as manganese, calcium, zinc, copper and cadmium, in order to separate cobalt from nickel.

In step v., 1 to 80 at.% of the uranium ions in the basified leachate solution in step ii. are extracted into the organic phase in step v., preferably more than 5 at.%, more preferably more than 10 at%, most preferably more than 15 at%, preferably less than 70 at%, more preferably less than 45 at%.

In a preferred embodiment, the present invention provides a process according to the first aspect of the invention, wherein said extraction in step v. is performed at a temperature between 20 and 45 °C, preferably at a temperature between 20 and 40 °C, even more preferably at a temperature between 25 and 35 °C. It was found that lower temperatures provide a better selectivity for Mn extraction, and thus better separation of Mn from Co. Preferably, said temperature is above 20 °C, or even above 25 °C to facilitate operational temperature settings under circumstances of high environmental temperature.

The solvent extraction step v. can be performed in any device suitable and is not specifically limited. Solvent extraction equipment generally includes at least one or more devices consisting of a mixer-settler, a column contactor, a centrifugal contactor or any other type of contactor. Preferably, the extraction is performed in a counter-current configuration.

In a preferred embodiment, the present invention provides a process according to the first aspect of the invention, wherein said aqueous uranium, nickel and/or cobalt solution entering step v. has a pH between 1.0 and 5.0 before being contacted with said solvents comprising extractant, generating a chemical equilibrium between the aqueous nickel solution and the solvent, more preferably at a pH between 1.5 and 3.5, and most preferably at a pH between 2.0 and 3.0.

In one embodiment, the present invention provides a process according to the first aspect of the invention, wherein said aqueous uranium, nickel and/or cobalt solution obtained in step iv. is acidified before entering step v.

In a preferred embodiment, the present invention provides a process according to the first aspect of the invention, wherein said organic phase used in step v. comprises said extractant in an amount of 5 to 50 vol.%, relative to the total volume of said organic phase, and said diluent in an amount of 50 to 95 vol.%, relative to the total volume of said organic phase. More preferably, said organic phase comprises said extractant in an amount of 30 to 40 vol.%, and said diluent in an amount of 60 to 70 vol.%. The organic phase may comprise a modifier.

In a preferred embodiment, the present invention provides a process according to the first aspect of the invention, wherein said diluent is a hydrocarbon. More generally, any organic, water-immiscible solvent capable of dissolving the extractant can be used. Hence, the diluent is not specifically limited. As diluent examples, kerosene-based compounds, which can be aliphatic, naphthenic, aromatic or even mixtures thereof, can be used.

In a preferred embodiment, the present invention provides a process according to the first aspect of the invention, wherein said extractant used in step v. comprises alkylphosphorus-based extractants. Alkylphosphorus-based acids act as chelating extractants due to the presence of coordinative oxygen atoms in these molecules. Among the elements in the aqueous solution, an element that forms the corresponding chelate compound with a higher stability facilitates the extraction efficiency more compared to an element that is less likely to form the chelate compound. Alkylphosphorus-based acids have a high selectivity for uranium over nickel and cobalt. Alkylphosphorus-based acid extractants may be chosen from, but are not limited to, the following options:

- phosphoric acids, such as di-(2-ethylhexyl) phosphoric acid (also known as D2EHPA, DEHPA, HDEHP, P204), an organophosphorus compound with the formula $(C_8H_{17}O)_2PO_2H$.
- phosphonic acids, such as 2-ethylhexylphosphonic acid mono-2-ethylhexyl ester (also known as EHEHPA, HEHEHP, P507, PC88A), an organophosphorus compound with the formula R1 = $(C_8H_{17})(C_8H_{17}O)PO_2H$.
- phosphinic acids, such as bis-(2,4,4-trimethylpentyl) phosphinic acid (also known as Cyanex 272, Ionquest 290), an organophosphorus compound with the formula $(C_{16}H_{34})PO_2H$.

Of these alkyl phosphorus-based acid extractants, phosphoric acids have the highest selectivity for uranium. Such phosphoric acids can be used in their protonated form, but also as derivates thereof, including the alkali-metal-converted form, i.e. a phosphoric acid that is partially neutralized with an alkali metal hydroxide, and/or the from preloaded with cobalt, nickel or a mixture of nickel and cobalt. It was found that preloading of said extractant used in step v. with nickel and/or cobalt allowed for an optimal and improved extraction without loss of processability of the extractant. During the preloading step, the partially neutralized extractant, i.e. being in the alkali-metal-converted form, exchanges the alkali metal, typically sodium, on the extractant for nickel and/or cobalt from an aqueous nickel and/or cobalt sulphate solution. Preferably, the residual amount of alkali metal on the preloaded solvent is as low as possible, so to limit transfer of residual alkali metal from the preloaded solvent to the aqueous mixed metal sulphate solution when extracting impurities from this solution.

Preferably, said alkyl phosphorus-based extractant comprises an alkylphosphoric acid and/or derivatives thereof. Most preferably, the alkylphosphoric acid is di-(2-ethylhexyl) phosphoric acid, and/or nickel or cobalt salts thereof.

In one embodiment of the invention, all elements except uranium, and iron, if present, extracted in step v. into the organic phase, are recovered from said organic phase after step v. using a first stripping fluid ($S_1$). This allows to obtain a first aqueous eluate ($E_1$) typically comprising, if present, manganese, calcium, zinc, copper and cadmium, while uranium remains in the organic phase. By this step, the capacity of the extractant is regenerated to a large extent, yielding a solvent free of metals other than uranium, that can be reused for extraction.

In a second aspect of the present invention, the uranium-enriched organic phase obtained in step v. is treated with a first stripping fluid ($S_1$) and subsequently with a second stripping fluid ($S_2$), thereby respectively obtaining a first aqueous eluate ($E_1$) and a second aqueous eluate (Ez).

The residual acid concentration of the stripping fluid after the second stripping step is higher than that after the first stripping step, whereby said residual acid concentration is measured at the final contacting stage of the organic phase with the respective stripping fluid, i.e., the stage where the aqueous stripping fluid leaves the stripping section in a counter-current configuration. The aqueous stripping fluid after stripping is also called the eluate. Thus, the acid concentration of the second eluate solution ($E_2$) is higher than that of the first eluate solution ($E_1$).

Subsequently contacting the organic phase with the second stripping fluid ($S_2$), after the treatment with the first stripping fluid ($S_1$), results in the selective elution of a substantial amount of uranium from the organic phase. Only the second stripping step results in removal of uranium from the organic phase, said organic phase having a high selectivity for uranium. This is effected by the higher residual acid concentration at the final contacting stage of the organic phase with the second stripping fluid, and, or in other words, by the higher acid concentration in the second eluate ($E_2$). Preferably, said first and second stripping fluid are one or more selected from the group comprising: hydrofluoric acid, hydrochloric acid, hydrobromic acid, hydroiodic acid, nitric acid, phosphoric acid, sulphuric acid, boric acid and perchloric acid. More preferably, said first and second mineral acid are selected from sulphuric acid, hydrochloric acid, and phosphoric acid.

Preferably, said first stripping fluid $(S_1)$ has an acid concentration of 0.5 M to 5 M. An "acid concentration" of the stripping fluid as used herein refers to the initial acid concentration of the stripping fluid, namely measured at the initial contacting stage of the organic phase with the stripping fluid.

In a preferred embodiment, said first stripping fluid comprises a sulphuric acid concentration of at least 50 g/L, more preferably at least 100 g/L, preferably less than 500 g/L, more preferably less than 250 g/L.

In a preferred embodiment, said first stripping fluid $(S_1)$ comprises an hydrochloric acid content of at least 18 g/L, more preferably at least 36 g/L, and preferably less than 182 g/L, more preferably less than 91 g/L.

In a preferred embodiment, said first stripping fluid comprises a phosphoric acid concentration of at least 50 g/L, more preferably at least 100 g/L, preferably less than 500 g/L, more preferably less than 250 g/L.

Preferably, said second stripping fluid $(S_2)$ has an acid concentration of 2 M to 10 M. The upper limit of the concentration of the second stripping fluid is determined by the stability of the extractant in the acid conditions.

In a preferred embodiment, said second stripping fluid $(S_2)$ comprises a sulphuric acid concentration of at least 200 g/L, more preferably at least 250 g/L, most preferably at least 500 g/L, and preferably less than 1000 g/L, more preferably less than 800 g/L.

In a preferred embodiment, said second stripping fluid $(S_2)$ comprises an hydrochloric acid concentration of at least 75 g/L, more preferably at least 100 g/L, most preferably more than 180 g/L, preferably less than 350 g/L, more preferably less than 250 g/L.

In a preferred embodiment, said second stripping fluid $(S_2)$ comprises a phosphoric acid concentration of at least 200 g/L, more preferably at least 250 g/L, most preferably at least 500 g/L, and preferably less than 1000 g/L, more preferably less than 800 g/L.

In a preferred embodiment, the acid concentration of the second stripping fluid $(S_2)$ is higher than that of the first stripping fluid $(S_1)$.

The stripping step can be performed in any device suitable and is not specifically limited. Stripping equipment generally includes at least one or more devices consisting of a mixer-settler, a column contactor, a centrifugal contactor or any other type of contactor. Preferably, stripping with the first stripping fluid is performed in a counter-current configuration.

In a preferred embodiment, stripping with the second stripping fluid is performed in a single extraction step.

In a preferred embodiment, the present invention provides a process according to the first aspect of the invention, wherein stripping of the organic phase with the first and second stripping fluid is performed at a temperature between 20 and 55 °C, preferably at a temperature between 20 and 45 °C, more preferably at a temperature between 25 and 40 °C, most preferably at a temperature of about 25 °C, 30 °C, 35 °C, or 40 °C, or any value there in between.

In a preferred embodiment, the present invention provides a post-treatment step according to the first aspect of the invention, wherein said uranium-rich organic phase after the first stripping, when performed with hydrochloric acid, is additionally washed with sulphuric acid. Washing with sulphuric acid allows for the removal of residual chloride ions and possibly residual extracted metals other than uranium from the solvent.

In a preferred embodiment, the present invention provides a process according to the first aspect of the invention, wherein nickel and cobalt are scrubbed from said uranium-rich organic phase, before stripping with the first and second stripping fluid. To recover this co-extracted nickel and cobalt from the loaded organic phases before going to the elution section, it is first scrubbed selectively from these solvents by washing with an acidic solution, such as a sulphuric acid solution in water. Nickel and cobalt are selectively scrubbed by applying optimal conditions of pH, specifically the acidity of the final scrub solution, and the added amount of acid is adapted to reach this required pH.

In a preferred embodiment, the stripping of the organic phase is performed continuously using the first stripping fluid $(S_1)$, while only periodically, the second stripping fluid $(S_2)$ is used to remove uranium from the organic phase. More specifically, the second stripping fluid is applied to the organic phase when the concentration of uranium in the organic phase is higher than 0.5 g/L, more specifically higher than 1 g/L, even more specifically higher than 2 g/L. In this way, the accumulation of uranium on the organic phase is stopped, and the solvent extraction capacity of the organic phase is controlled.

In another preferred embodiment, the second, uranium-enriched aqueous eluate $(E_2)$ obtained after stripping said organic phase with a second stripping fluid $(S_2)$ is re-introduced upstream in the process, more preferably it is re-introduced before step ii., and most preferably it is re-introduced to step i. More specifically the re-introduction of the aqueous eluate $(E_2)$ to step i. has the advantage that the acid is used for leaching. Such process additionally has the advantage that uranium is only exiting the process via the uranium precipitate, while trace amounts of uranium are captured on the organic phase without generating diluted was solutions containing uranium. In a preferred embodiment, the second stripping fluid $(S_2)$ is sulphuric acid and the aqueous eluate $(E_2)$ is re-introduced to step i.

In a preferred embodiment, the second stripping fluid $(S_2)$ is hydrochloric acid and the aqueous eluate $(E_2)$ is re-introduced to step i.

In a preferred embodiment, the second stripping fluid $(S_2)$ is phosphoric acid and the aqueous eluate $(E_2)$ is re-

introduced to step ii.

In a preferred embodiment, the second stripping fluid ($S_2$) is phosphoric acid and the aqueous eluate ($E_2$) is re-introduced to step iii.

In a preferred embodiment, the process of the current invention is a continuous process, whereby stripping of the organic phase is performed continuously using the first stripping fluid ($S_1$), and subsequently using the second stripping fluid ($S_2$), to remove uranium from the organic phase. The second, uranium-enriched, eluate ($E_2$) is continuously re-introduced to the leaching step i. The uranium content on the organic phase will thus evolve to a constant steady state concentration.

The present invention provides a process for preparing an aqueous solution comprising nickel and/or cobalt that has reduced or removed uranium content. Especially due to the use of solvent extraction, the uranium practically completely removed from the final solution. The content of uranium in said aqueous raffinate obtained in step v. is preferably less than 5 mg/L, more preferably less than 1 mg/L, even more preferably less than 0.1 mg/L.

The inventive process is especially suitable for providing a concentrated nickel sulphate solution, i.e., an aqueous nickel sulphate solution having a nickel content of at least 60 g Ni/L, preferably at least 80 g Ni/L, and more preferably between 80 and 200 g Ni/L, or even between 90 and 175 g Ni/L and most preferably between 100 and 150 g Ni/L. Preferably, the nickel sulphate solution obtained in the inventive process is a nickel sulphate solution having a nickel content of between 110 and 140 g/L, more preferably between 120 and 140 g/L, and most preferably said nickel sulphate solution having a nickel content of about 130 g/L.

The inventive process is also suitable for providing a concentrated cobalt sulphate solution, i.e., an aqueous cobalt sulphate solution having a cobalt content of at least 60 g Co/L, preferably at least 80 g Co/L, and more preferably between 80 and 200 g Co/L, or even between 90 and 175 g CoIL and most preferably between 100 and 150 g Co/L. Preferably, the cobalt sulphate solution is a cobalt sulphate solution having a cobalt content of between 110 and 140 g/L, more preferably between 120 and 140 g/L, and most preferably said cobalt sulphate solution having a cobalt content of about 130 g/L.

In a preferred embodiment of the present invention, the process comprises one or more further solvent extraction steps or other purification steps to obtain nickel or cobalt salts with battery-grade purity, such solutions comprise at least 99 at.% Ni or Co, relative to the total amount of metals in said solution. Preferably, such a solution has at least 99.5 at.% Ni or Co, and more preferably at least 99.9 at.% Ni or Co.

## EXAMPLES

The following examples are intended to further clarify the present invention, and are nowhere intended to limit the scope of the present invention.

EXAMPLE 1

A continuous process is executed as depicted in Figure 1. In a first step, a solid feed consisting of MHP product is leached (step i.) in a reactor comprising water and sulphuric acid as the mineral acid, whereby a solution comprising uranium, aluminium, iron, nickel and cobalt is obtained. The pH of this solution is then increased to 4 (step ii.), leading to precipitation of iron and aluminium. Next, a phosphate compound is added in a stoichiometric excess of about 100 times relative to the amount of uranium ions present (step iii.), while maintaining the pH at 4, leading to the precipitation of about 33% of the uranium atoms present. A precipitate comprising uranium, iron and aluminium is then filtered off (step iv.). The obtained solution comprising nickel, cobalt, and the remainder of uranium is subjected to solvent extraction (step v.) using D2EHPA as alkylphosphoric acid extractant. The organic phases takes up nearly all of the remaining uranium together with several other impurities, while both nickel and cobalt are predominantly left in solution.

The solvent is stripped from metals other than uranium via a multi-stage stripping process with an 200 g/L $H_2SO_4$ solution as the first stripping fluid ($S_1$), obtaining a first eluate ($E_1$) with a final concentration of about 10 g/L $H_2SO_4$.

Next, a one-stage batch process is executed to strip the solvent from part of the uranium. The second stripping fluid ($S_2$) and second eluate ($E_2$) have a concentration of about 500 g/L of $H_2SO_4$. The solvent is re-used for extraction, and the second, uranium-enriched, eluate ($E_2$) is reintroduced to the leaching step.

Once a steady state is reached, the uranium concentration after the leaching step is about 7.5 mg/L. Via phosphate precipitation, the uranium concentration is lowered to about 5 mg/L. The concentration of uranium on the solvent is about 0.5 g/L, and the outgoing aqueous raffinate comprises < 1 mg/L of uranium.

EXAMPLE 2

A MHP product is provided with a composition according to Table 1.

Table 1. MHP composition, relative to the dry weight of said composition.

|  | wt.% |
|---|---|
| Al | 0.3 |
| Ca | < 0.5 |
| Co | 4.0 |
| Fe | 0.3 |
| Mg | < 2 |
| Mn | 6 |
| Ni | 36 |
| U | 30 [1] |

[1] expressed in ppm.

In a first step, MHP is leached in a reactor comprising water and sulphuric acid. A reducing agent is added to increase the leaching yield. Once the solid contents have dissolved in the aqueous medium, the pH of the solution is increased to 4 by slowly adding calcium carbonate. A precipitate comprising iron and aluminium is formed while nickel and uranium remain predominantly in solution.

Subsequently, phosphoric acid is added in an amount of 250:1, relative to the amount of uranium in the obtained leachate solution, to form a precipitate of uranium in the leachate. The pH is maintained to a value of about 4 to avoid re-dissolution of iron and aluminium. The precipitate containing iron, aluminium and uranium is then filtered off. Analysis of the filtrate indicated that the amount of uranium is reduced by about 85%, relative to the uranium content in said MHP.

Next, the filtrate is subjected to solvent extraction whereby the amount of uranium is strongly further decreased.

EXAMPLE 3

A CHIP product is provided with a composition according to Table 2.

Table 2. CHIP composition, relative to the dry weight of said composition.

|  | wt.% |
|---|---|
| Al | < 0.1 |
| Ca | < 2 |
| Co | 35 |
| Fe | 0.1 |
| Mg | 5 |
| Mn | < 2 |
| Ni | < 0.1 |
| U | 64 [1] |

[1] expressed in ppm.

In a first step, CHIP is leached in a reactor comprising water and a 1:1 mixture of hydrochloric acid and sulphuric acid. Once the solid contents have dissolved in the aqueous medium, the pH of the solution is increased to 4.2 by slowly adding nickel carbonate. A precipitate comprising iron and aluminium is formed while nickel and uranium remain in solution.

Subsequently, $NaH_2PO_4$ is added to the eluate to form a precipitate of uranium in the leachate. The precipitate containing uranium is then filtered off. The uranium precipitate is subjected to a reduction process to recover the uranium. Analysis of the filtrate indicated that the amount of uranium is reduced by about 60%, relative to the uranium content in said CHIP.

Next, the filtrate is subjected to solvent extraction whereby the amount of uranium is significantly further decreased.

EXAMPLE 4

An MHP product is leached, and after precipitating iron, aluminium and part of the uranium, a solution with the following composition is obtained, and provided as a feed to a solvent extraction process for further purification:

Table 3. Composition of feed and raffinate of the solvent extraction step.

|  | Ni (g/L) | Mn (mg/L) | Co (mg/L) | Mg (mg/L) | Ca (mg/L) | Zn (mg/L) | U (mg/L) |
|---|---|---|---|---|---|---|---|
| Feed | 59 | 109 | 1 000 | 497 | 617 | 1639 | 6 |
| Raffinate | 53 | < 1 | 700 | 305 | < 1 | < 1 | < 1 |

An organic phase composed of 25 vol% D2EHPA with Escaid 110 as a diluent is used. The extractant is 49% saponified with 400 g/L NaOH. The extraction of uranium and other impurities is performed in batch mode, in four steps, at O/A = 0.25, and at a temperature of 30 °C. The raffinate composition is also reported in the above table. Manganese, calcium, and zinc are removed down to less than 1 mg/L in the raffinate, and also uranium is removed down to <1 mg/L.

EXAMPLE 5

An MHP feed is continuously leached, purified from iron and aluminium and uranium by precipitation and solvent extraction. The organic phase is stripped with a first stripping fluid, and the uranium-enriched solvent is re-used for extraction. When the uranium content on the solvent reaches 1.29 or 2.86 g/L, a treatment with a second stripping fluid is applied as follows: A one-stage batch process is executed to strip an organic phase composed of 30 vol% D2EHPA with Escaid 110 as a diluent, at an O/A of 1 and a temperature of 40 °C. The initial uranium concentration on the solvent, acid concentration of the second stripping fluid, and the percentage of uranium transferred to the aqueous eluate are the following:

Table 4. Uranium extraction from the solvent.

| U on solvent (g/L) | $H_2SO_4$ (g/L) | % U recovered |
|---|---|---|
| 2.86 | 251 | 18.2 |
| 2.86 | 748 | 39.4 |
| 2.86 | 499 | 27.3 |
| 1.29 | 251 | < 1 |
| 1.29 | 499 | 6.7 |
| 1.29 | 748 | 26.7 |

**Claims**

1. A process for preparing nickel and/or cobalt salt solutions, said process comprising the steps of:

   i. leaching a solid material feed comprising 1 to 100 ppm uranium, at least 20 wt% of at least one of nickel and cobalt, and at least 0.05 wt% of at least one of iron and aluminium, relative to the total dry weight of the solid material feed, with a mineral acid selected from the group consisting of $H_2SO_4$, HCl and $HNO_3$ in an aqueous medium, thereby obtaining a leachate solution comprising uranium ions and at least one of nickel ions and cobalt ions, respectively;
   ii. increasing the pH of said leachate solution to at least 2.5, thereby precipitating iron and/or aluminium compounds and obtaining a basified leachate solution;
   iii. simultaneous or subsequent to step ii., adding a phosphate compound to the basified leachate solution in step ii. to form a uranium precipitate;
   iv. separating the precipitate formed in step iii. from the leachate solution, thereby obtaining an aqueous solution comprising uranium, and at least one of nickel ions and cobalt ions; and
   v. extracting uranium from said aqueous solution obtained in step iv. into an organic phase comprising an extractant and a diluent, thereby obtaining an uranium-enriched organic phase and an aqueous raffinate comprising at least one of nickel ions and cobalt ions.

2. Process according to claim 1, whereby said uranium-enriched organic phase obtained in step v. is treated with a first stripping fluid ($S_1$) and subsequently with a second stripping fluid ($S_2$), thereby respectively obtaining a first aqueous eluate ($E_1$) and a second, uranium-enriched, aqueous eluate ($E_2$), whereby the second aqueous eluate ($E_2$) has a higher acid concentration than the first aqueous eluate ($E_1$).

3. Process according to claim 2, whereby said first stripping fluid ($S_1$) has an acid concentration of 0.5 M to 5 M, and whereby said second stripping fluid ($S_2$) has an acid concentration of 2 M to 10 M.

4. Process according to claim 2 or 3, wherein said first and second stripping fluid comprise a mineral acid selected from sulphuric acid, hydrochloric acid, and phosphoric acid.

5. Process according to any of claims 2 to 4, whereby said organic phase is treated with a first and second stripping fluid at a temperature between 20 and 55 °C.

6. Process according to any of claims 2 to 5, whereby said second, uranium-enriched, aqueous eluate (Ez) is re-introduced upstream in the process.

7. Process according to any of claims 1 to 6, wherein the content of uranium in said aqueous raffinate obtained in step v. is less than 5 mg/L.

8. Process according to any of claims 1 to 7, wherein 20 to 95 at.% of the uranium ions in said basified leachate solution in step ii. are precipitated into the uranium precipitate, and wherein 1 to 80 at.% of the uranium ions in said basified leachate solution in step ii., are extracted to said organic phase.

9. Process according to any of claims 1 to 8, wherein said extractant comprises an alkylphosphorus-based extractant, preferably an alkylphosphoric acid and/or derivatives thereof.

10. Process according to any of claims 1 to 9, wherein said phosphate compound is selected from the group consisting of $H_3PO_4$ and compounds comprising $H_2PO_4^-$, $HPO_4^{2-}$ or $PO_4^{3-}$.

11. Process according to any of claims 1 to 10, wherein the phosphate compound is added in a stoichiometric excess of 10 to 300 times relative to the amount of uranium ions in said basified leachate solution in step ii.

12. Process according to any of claims 1 to 11, wherein the pH of said leachate solution is increased in step ii.(a) to between 2.5 and 4.5 and whereby the pH of the basified leachate solution from step ii.(a) is increased in step ii.(b) to between 4.5 and 6.0, and whereby the precipitate formed in step ii.(a) is filtered off prior to step ii.(b).

13. Process according to any of claims 1 to 12, wherein said pH in step ii. is increased by adding a Ca base and/or a Ni base.

14. Process according to any of claims 1 to 13, whereby the precipitate containing iron and/or aluminium formed in step ii. is not separated from the basified leachate solution prior to adding said phosphate in step iii.

15. Process according to any of claims 1 to 14, wherein the solid material feed comprises mixed hydroxide precipitate or cobalt hydroxide intermediate precipitate.

Figure 1

Europäisches
Patentamt

European
Patent Office

Office européen
des brevets

# EUROPEAN SEARCH REPORT

**Application Number**

EP 24 16 7018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/118455 A1 (ENFIN AUSTRALIA PTY LTD [AU]; DUNN GRENVIL MARQUIS [ZA]) 21 October 2010 (2010-10-21) * page 3, lines 20-25 * * page 11, line 25 - page 19, line 11 * ----- | 1-15 | INV. C22B3/00 C22B60/02 |
| A | CA 3 196 776 A1 (KEMIRA OYJ [FI]) 5 May 2022 (2022-05-05) * page 7, line 19 - page 13, line 13 * ----- | 1-15 | |
| A | GB 759 900 A (ATOMIC ENERGY AUTHORITY UK) 24 October 1956 (1956-10-24) * examples 1a, 2a * ----- | 1-15 | |
| A | Pourbaix: "Pourbaix diagrams for Fe, Al, U and Co" In: "Atlas of Electrochemical Equilibria in Aqueous Solutions", 1 January 1974 (1974-01-01), XP093061334, * the whole document * ----- | 1-15 | |

**TECHNICAL FIELDS SEARCHED (IPC)**

C22B

The present search report has been drawn up for all claims

| Place of search | Date of completion of the search | Examiner |
|---|---|---|
| The Hague | 12 September 2024 | Panitz, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 7018

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | | Publication date | Patent family member(s) | | Publication date |
|---|---|---|---|---|---|
| WO 2010118455 | A1 | 21-10-2010 | AU | 2009344269 A1 | 21-10-2010 |
| | | | BR | PI0910648 A2 | 22-09-2015 |
| | | | CN | 102066590 A | 18-05-2011 |
| | | | EP | 2279272 A1 | 02-02-2011 |
| | | | WO | 2010118455 A1 | 21-10-2010 |
| CA 3196776 | A1 | 05-05-2022 | AU | 2021368016 A1 | 01-06-2023 |
| | | | CA | 3196776 A1 | 05-05-2022 |
| | | | WO | 2022090628 A1 | 05-05-2022 |
| GB 759900 | A | 24-10-1956 | NONE | | |

**EP 4 624 602 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 759900 A

- WO 2022090628 A1